# EUROPEAN PATENT APPLICATION

(11) **EP 4 657 552 A1**
(43) Date of publication of application: **03.12.2025**
(21) Application number: 25179664.5
(22) Date of filing: 29.05.2025
(51) Int. Cl.: H01M 4/139, H01M 4/66, H01M 10/0585, H01M 10/42, H01M 4/04, H01M 10/0525

(54) **ELECTRODE PLATE AND METHOD OF MANUFACTURING THE SAME**

(30) Priority: 29.05.2024 KR 20240070260
(71) Applicant: SAMSUNG SDI CO., LTD., Yongin-si, Gyeonggi-do 17084 (KR)
(72) Inventor: SHIN, Dongkyoung, Yongin-si, Gyeonggi-do 17084 (KR); LEE, Donggeun, Yongin-si, Gyeonggi-do 17084 (KR)
(74) Representative: Marks & Clerk LLP

(57) **Abstract**

An electrode plate includes a substrate, an active material layer on the substrate, a hydrophobic coating layer on at least an edge of the active material layer, the hydrophobic coating layer having a hydrophobic functional group, and an insulating portion at a boundary between the active material layer and the substrate, the insulating portion covering at least a part of a side surface of the active material layer below the hydrophobic coating layer.

## Description

### BACKGROUND

### 1. Field

The present disclosure relates to an electrode plate and a manufacturing method thereof.

### 2. Description of the Related Art

Rechargeable batteries are manufactured in various shapes, and among these, a pouch battery may include an electrode assembly in which an insulating separator is interposed between a positive electrode plate and a negative electrode plate. In this case, a pouch may accommodate the electrode assembly in an inner space therein.

Electrode assemblies of rechargeable batteries are largely divided into a winding type and a stacking type depending on a structure thereof. The stacking type has good structural safety and excellent spatial utility, so it is widely applied to small- and medium-sized products. The stacking type rechargeable battery may include a stack of electrodes (i.e., the positive electrode plate and the negative electrode plate) with the separator therebetween.

### SUMMARY

According to aspects of embodiments, an electrode plate includes a substrate, an active material layer on the substrate, a hydrophobic coating layer on at least an edge of the active material layer, the hydrophobic coating layer having a hydrophobic functional group, and an insulating portion at a boundary between the active material layer and the substrate, the insulating portion covering at least a part of a side surface of the active material layer below the hydrophobic coating layer.

The insulating portion may be between the substrate and the hydrophobic coating layer, an entirety of the insulating portion being below the hydrophobic coating layer.

The hydrophobic coating layer may be coated on an entire top surface of the active material layer, the top surface of the active material layer facing away from the substrate.

The active material layer may be a dry active material layer.

An adhesive layer may be between the substrate and the active material layer.

The hydrophobic functional group may include at least one of fluorine and silane.

An electrode plate manufacturing method according to an embodiment includes preparing a substrate and an active material layer, coating a hydrophobic coating layer with a hydrophobic functional group on the active material layer; cutting the active material layer, attaching the active material layer to the substrate, and discharging an insulating solution to the boundary between the active material layer and the substrate to form an insulating portion.

In the discharging, the insulating solution may cover a portion of the side that the hydrophobic coating layer is not coated at the side of the active material layer.

The coating may coat the hydrophobic coating layer to the area where the cutting is performed on the active material layer.

In the coating, the hydrophobic coating layer may be coated to the entire surface of the active material layer.

The cutting may be performed after the coating.

The attaching may attach the adhesive layer to one of the substrate or the active material layer, thereby attaching the substrate and the active material layer to each other.

The active material layer may be a dry active material layer.

The hydrophobic functional group may include at least one of fluorine and silane.

At least some of the above and other features of the invention are set out in the claims.

### BRIEF DESCRIPTION OF THE DRAWINGS

Features will become apparent to those of skill in the art by describing in detail exemplary embodiments with reference to the attached drawings, in which:
FIG. 1 is a perspective view showing a rechargeable battery.
FIG. 2 is a cross-sectional view showing an electrode plate according to an embodiment.
FIG. 3 is a flowchart showing an electrode plate manufacturing method according to an embodiment.
FIG. 4 is a cross-sectional view showing preparation of a substrate and an active material layer.
FIG. 5 is a cross-sectional view showing a hydrophobic coating layer coated on an active material layer.
FIG. 6 is a cross-sectional view showing a process of cutting a portion of an active material layer.
FIG. 7 is a cross-sectional view showing attachment of an active material layer to a substrate.
FIG. 8 is a cross-sectional view showing a process of discharging an insulating liquid to a boundary portion between an active material layer and a substrate.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It should be further understood that the terms "comprise," "include" and/or "comprising," "including," when used in this specification, specify the presence of stated features, integers, steps, operations, elements, and/or components, but do not preclude the presence or addition of one or more other features, integers, steps, operations, elements, components, and/or groups thereof.

The statement that two objects of a comparison are "the same" may mean "substantially the same." Therefore, "substantially identical" may include deviations that are considered in the art to be low-for example, deviations of no more than 5%. Additionally, the uniformity of a parameter in a given region may mean uniformity from an average perspective.

Throughout the specification, unless otherwise stated, each component may be singular or plural.

When any configuration is disposed "on top of" (or "under") a component or "above" (or "below") a component, it may mean that any configuration is disposed in contact with the top (or bottom) surface of the component, as well as that other configurations may be interposed between the component and any configuration disposed on (or below) the component.

Additionally, if a component is described as "connected to" or "coupled to" another component, the components may be directly connected or coupled to each other, or other components may be "interposed" between each component, so that each component may be "connected" or "coupled" through other components.

As used herein, the term "and/or" includes any one or all combinations of one or more related items. Additionally, the use of "may" when describing embodiments of the present disclosure refers to "one or more embodiments of the present disclosure". Expressions such as "at least one," preceding a list of elements modify an entire list of elements and not an individual element in the list.

When reference is made to "A and/or B" throughout the specification, it means A, B or A and B, unless specifically stated to the contrary, and when reference is made to "C through D," it means C or higher and D or lower unless specifically stated to the contrary.

When a phrase such as "at least one selected from A, B, and C," "at least one selected from A, B, or C," "at least one selected from A, B, and C groups" and "at least one selected from A, B, and C" is used to specify a list of elements A, B, and C, the phrase may refer to any and all suitable combinations.

The term "use" may be considered synonymous with the term "utilize". As used herein, terms such as "substantially" and "about" are used as terms of approximation and not as terms of degree and are intended to explain the inherent variations of measured or calculated values that could be recognized by a person of ordinary skill in the art.

It should be understood that, although the terms "first," "second," "third," etc., may be used herein to describe various elements, components, regions, layers, and/or sections, such elements, components, regions, layers, and/or sections should not be limited by these terms. These terms are only used to distinguish one element, component, region, layer or section from another element, component, region, layer, or section. Thus, a first element, component, region, layer, or section discussed herein could be termed a second element, component, region, layer, or section, without departing from the scope of the embodiments.

As shown in the drawings, spatially relative terms, such as "beneath," "below," "lower," "under," "above," "upper," and the like, may be used herein for ease of explanation to describe one element or feature's relationship to another element(s) or feature(s) as illustrated in the drawings. It should be understood that spatially relative positions are intended to encompass different orientations of the device in use or in operation, in addition to the orientations depicted in the drawings. For example, if the device in the drawings is turned over, elements described as "below," "beneath," or "under" other elements or features would then be oriented "above" the other elements or features. Thus, the term "down" can encompass both an orientation of above and below.

The terms used herein are intended to describe embodiments of the present disclosure and are not intended to limit it.

Hereinafter, a rechargeable battery including an electrode plate is described in detail with reference to accompanying drawings before explaining the electrode plate according to an embodiment.

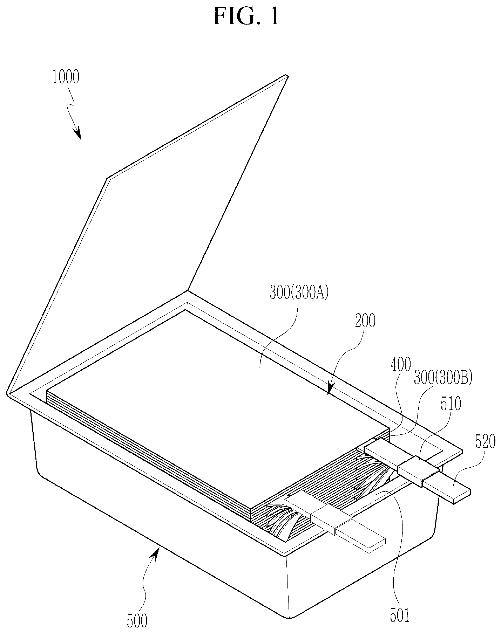

FIG. 1 is a perspective view showing a rechargeable battery including an electrode plate according to an embodiment.

Referring to FIG. 1, a rechargeable battery 1000 may include an electrode assembly 200 and a case 500. The electrode assembly 200 may be accommodated inside the case 500.

The electrode assembly 200 may include a plurality of electrode plates 300 and a separator 400. For example, the plurality of electrode plates 300 may include a first electrode plate 300A and a second electrode plate 300B, so the first electrode plate 300A and the second electrode plate 300B may be repeatedly wound or stack laminated with the separator 400 therebetween. For example, the electrode assembly 200 may be a stacked-type in which the electrode plates 300 are arranged to be stacked in multiple layers. In another example, the electrode assembly 200 may be a jelly-roll type that is repeatedly wound.

The manufacturing process of the stacked-type electrode assembly 200 may include a primary stacking process and a secondary stacking process.

In the primary stacking process, a double-sided cathode (full cathode) and a double-sided anode (full anode) may be stacked. Here, the double-sided cathode (full cathode) may be any of the plurality of first electrode plates 300A excluding the outermost first electrode plate 300A. Also, the double-sided anode (full anode) may be the second electrode plate 300B.

In the secondary stacking process, a cross-section cathode (half cathode) may be stacked on one or more of two of the outermost sides with a stacking direction as a reference. Here, the cross-section cathode may be the outermost first electrode plate 300A among the first electrode plates 300A.

For example, the cross-section cathode may be stacked on the upper outermost edge of the electrode assembly 200. In another example, the cross-section cathode may be stacked on the upper outermost edge and both outermost edges of the electrode assembly 200. Here, the double-sided cathode and the double-sided anode are those in which an active material is coated on both surfaces of the substrate, and the cross-section cathode is one in which the active material layer is coated (e.g., positioned) on only one surface of the substrate.

The separator 400 may be interposed between the first electrode plate 300A and the second electrode plate 300B. The separator 400 prevents short circuiting of the first electrode plate 300A and the second electrode plate 300B and enables the movement of lithium ions. To this end, the separator 400 may be made to be relatively larger than the first electrode plate 300A and the second electrode plate 300B.

The separator 400 may include a porous polymer film or a porous non-woven fabric. For example, the porous polymer film may include (e.g., consist of) a single layer or multiple layers including a polyolefin-based polymer, e.g., ethylene polymer, propylene polymer, ethylene/butene copolymer, ethylene/hexene copolymer, and ethylene/methacrylate copolymer. For example, the porous non-woven fabric may include high-melting-point glass fibers and polyethylene terephthalate fiber. In another example, the porous non-woven fabric may include a high-heat-resistance separator (ceramic coated separator) including ceramic.

For example, the separator 400 may be cut by a unit length and placed between the first electrode plate 300A and the second electrode plate 300B, or a single separator 400 made of a ribbon shape may be placed in a zigzag shape between the first electrode plate 300A and the second electrode plate 300B. In another example, the separator 400 may be installed so that it is wound in one direction between the first electrode plate 300A and the second electrode plate 300B. As such, the arrangement form of the separator 400 may have any suitable form, but in the present embodiment, the description may address the separator 400 as being cut by the unit length and placed between the first electrode plate 300A and the second electrode plate 300B.

The case 500 may accommodate the electrode assembly 200. The electrode assembly 200 may be accommodated in the case 500 together with an electrolyte.

Here, the electrolyte may be a non-aqueous electrolyte. The electrolyte may include a lithium salt and an organic solvent. Examples of the organic solvent may include one or more of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

For example, the case 500 may be one of a pouch type, a cylindrical type, or a square type. The pouch type case 500 may be manufactured by bending plate-shaped exterior materials to face each other, then pressing or drawing a first side and including a recess in the first side.

The electrode assembly 200 may be accommodated in the recess of the first side of the case 500. A sealing portion 501 may be provided at the exterior circumference of the recess, and with the electrode assembly 200 accommodated in the recess, the sealing portion 501 may be sealed, e.g., via thermal fusion.

For example, in the plurality of electrode plates, the first electrode plate 300A may be a negative electrode, and the second electrode plate 300B may be a positive electrode (e.g., or it may also be the other way around). The first electrode plate 300A and the second electrode plate 300B may be electrically connected to the outside of the rechargeable battery 1000 through a strip terminal 520.

Additionally, an insulating tape 510 may be attached to the portion of the strip terminal 520 that is in contact with the case 500. The insulating tape 510 may prevent the strip terminal 520 and the case 500 from being short-circuited.

According to an embodiment, references to an electrode plate 300 hereinafter may refer to either one of the first electrode plate 300A and the second electrode plate 300B. Hereinafter, the electrode plate 300 according to an embodiment is described with reference to the drawings.

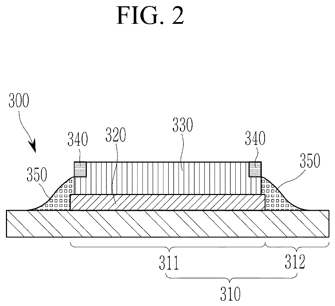

FIG. 2 is a cross-sectional view showing the electrode plate 300 according to an embodiment.

Referring to FIG. 2, the electrode plate 300 according to an embodiment includes a substrate 310, an active material layer 330, a hydrophobic coating layer 340, and an insulating portion 350.

The substrate 310 may be a current collector, and the current collector may include any suitable conductive material that does not cause a chemical reaction within the rechargeable battery. For example, the substrate 310 may include at least one of stainless steel, nickel (Ni), aluminium (Al), titanium (Ti), copper (Cu), and alloys thereof, may include a film, a sheet, a foil, etc., and be provided in various forms.

For example, the substrate 310 may include a current collecting region 311 (e.g., a coated region) and an uncoated region 312. The uncoated region 312 may be an uncoated edge of the coated current collecting region 311.

The active material layer 330, which will be described later, may be attached to the current collecting region 311. The edge region of the current collecting region 311 may be the uncoated region 312 to which the active material layer 330 is not attached (e.g., the active material layer 330 may have a non-overlapping relationship with the uncoated region 312). That is, the active material layer 330 may be positioned on at least a portion of one surface of the substrate 310, and the edge of the active material layer 330 may be positioned to be spaced apart from the edge of the substrate 310 (e.g., along a longitudinal direction of the substrate 310). The insulating portion 350, which will be described later, may be positioned at the boundary between the active material layer 330 and the substrate 310.

For example, in the manufacturing of a general electrode plate, a slit coater may be used to position an active material layer on a substrate. However, the electrode plate 300 according to an embodiment may be manufactured by attaching the film-type active material layer 330 to the substrate 310.

The active material layer 330 may be adhered to the substrate 310. For example, the active material layer 330 may be a dry active material layer adhered to the substrate via an adhesive layer 320 (e.g., the dry active material layer may be manufactured by mixing a binder and an active material, heating and stirring the mixture in a twin-screw stirrer, and then extruding it through a nozzle).

The adhesive layer 320 may be interposed between the substrate 310 and the active material layer 330. The adhesive layer 320 may be, e.g., an electrically conductive double-sided adhesive tape. The adhesive layer 320 may attach the active material layer 330 to the substrate 310. For example, the method of adhering the active material layer 330 and the substrate 310 to each other may include attaching the adhesive layer 320 to one of the active material layer 330 and the substrate 310, followed by passage through heated rollers to be laminated. In another example, various methods may be used to bond the active material layer 330 and the substrate 310 to each other (e.g., a method of applying an adhesive material to one of the active material layer 330 or the substrate 310 may also be possible).

Meanwhile, the active material layer 330 may further include a binder and a conductive material (e.g., in addition to the active material).

The binder may improve mechanical stability by mediating the bond between the substrate 310 and the active material. For example, the binder may be an organic binder or an aqueous binder, and may be used with a thickener, e.g., carboxylmethyl cellulose (CMC). For example, the organic binder may be at least one of vinylidene fluoride-hexafluoropropylene copolymer (PVDF-co-HFP), polyvinylidene fluoride (PVDF), polyacrylonitrile, and polymethylmethacrylate, and the aqueous binder may be, e.g., styrene-butadiene rubber (SBR).

The conductive material may improve electrical conductivity of the rechargeable battery. The conductive material may include a metal-based material. For example, the conductive material may include a carbon conductive material, e.g., at least one of graphite, carbon black, graphene, and carbon nanotube.

For example, when the electrode plate 300 is a positive electrode plate, the active material layer 330 may include a positive active material (i.e., a material into which lithium (Li) ions are inserted and extracted). Examples of the positive active material may include lithium metal oxide, e.g., lithium manganese oxide, lithium nickel oxide, lithium cobalt oxide, lithium nickel manganese oxide, lithium nickel cobalt manganese oxide, lithium nickel cobalt aluminium oxide, lithium phosphoric metallic compound, lithium phosphoric manganese compound, lithium phosphoric cobalt compound, and lithium phosphoric vanadium compound.

For example, when the electrode plate 300 is a negative electrode plate, the active material layer 330 may include a negative active material (i.e., a material in which lithium ions are intercalated and deintercalated). Examples of the negative active material may include carbon materials, e.g., crystalline carbon, amorphous carbon, carbon composite, and carbon fiber, lithium alloy, silicon (Si), and tin (Sn). Depending on the embodiment, the cathode active material may be natural graphite or artificial graphite.

The hydrophobic coating layer 340 includes a hydrophobic functional group and is coated along the edge of the active material layer 330. For example, referring to FIG. 2, the hydrophobic coating layer 340 may be on a top surface of the active material layer 330 (e.g., on a surface of the active material layer 330 facing away from the adhesive layer 320), and may cover an upper portion of a side surface of the active material layer 330 extending continuously from the top surface of the active material layer 330. For example, the hydrophobic coating layer 340 may extend (e.g., continuously) along the edge (e.g., periphery) of the active material layer 330 (e.g., along an entire perimeter of the active material layer 330). In another example, the hydrophobic coating layer 340 may be coated not only on the edge of the active material layer 330, but may be coated on the entire top surface of the active material layer 330 (e.g., a surface facing away from the adhesive layer 320 and being opposite to the surface adjacent to the substrate 310).

The hydrophobic functional group in the hydrophobic coating layer 340 may include at least one of fluorine and silane (e.g., may consist of fluorine or silane). The detailed description of the method for coating the hydrophobic coating layer 340 on the active material layer 330 will be described later in the manufacturing method of the electrode plate 300.

The insulating portion 350 is positioned at the boundary between the active material layer 330 and the substrate 310, covering the portion of the active material layer 330 that is not coated with the hydrophobic coating layer 340 on the side of the active material layer 330. In detail, the insulating portion 350 may be formed to cover a portion of the side of the active material layer 330 that is not coated with the hydrophobic coating layer 340. For example, referring to FIG. 2, the insulating portion 350 may contact (e.g., directly contact) a lateral side surface of the active material layer 330 directly below a lowermost point of the hydrophobic coating layer 340 and may continuously extend on the lateral side surface of the active material layer 330 and on the lateral side surface of the adhesive layer 320 to contact (e.g., directly contact) the top surface of the substrate 310 (e.g., a surface facing the active material layer 330).

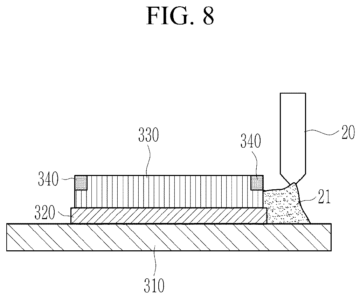

The method of creating the insulating portion 350 on the substrate 310 may include discharging an insulating liquid (e.g., an insulating liquid 21 in FIG. 8) onto the boundary between the active material layer 330 and the substrate 310, followed by curing. This insulating portion 350 is positioned at the boundary between the substrate 310 and the active material layer 330 to prevent movement or deformation of the active material layer 330 with respect to the substrate 310. For this purpose, a first portion of the insulating portion 350 contacts (e.g., directly contacts) and covers the active material layer 330, and a second portion of the insulating portion 350 (e.g., the remainder of the insulating portion 350) contacts (e.g., directly contacts) and covers the substrate 310.

According to an embodiment, the electrode plate 300 includes the hydrophobic coating layer 340 at the edge of the active material layer 330. Therefore, the hydrophobic coating layer 340 limits the spread of the insulating liquid (e.g., the insulating liquid 21 in FIG. 8) during the process of creating the insulating portion 350, so that the insulating portion 350 does not protrude to the outside more than the active material layer 330. In other words, the hydrophobic coating layer 340 at the edge of the edge of the active material layer 330 prevents or substantially minimizes the spread of the insulating portion 350 beyond the hydrophobic coating layer 340 along the active material layer 330, thereby preventing or substantially minimizing extension of the insulating portion 350 above the active material layer 330 (e.g., so un uppermost surface of the active material layer 330 may be above an uppermost surface of the insulating portion 350 relative to the substrate 310).

Accordingly, the electrode plate 300 according to an embodiment may prevent a localized thickness of the insulating portion 350 from rising. Therefore, the stacking flatness of the electrode plate 300 may be significantly improved. In other words, since the thickness of the center and both sides of the electrode plate 300 may be manufactured to be the same (e.g., since the thickness of the entire electrode plate 300 at the center and opposite edges may be manufactured to be substantially uniform), the rechargeable battery 1000 may be manufactured to meet the target external specifications.

For example, referring to FIG. 2, in the electrode plate 300 according to an embodiment, the active material layer 330 may be formed on one surface of the substrate 310. In another example, the active material layer 330 may be formed on both surfaces of the substrate 310 (e.g., on opposite surfaces of the active material layer 330), and it may be used as a double-sided cathode (full cathode) and a double-sided anode (full anode) described above.

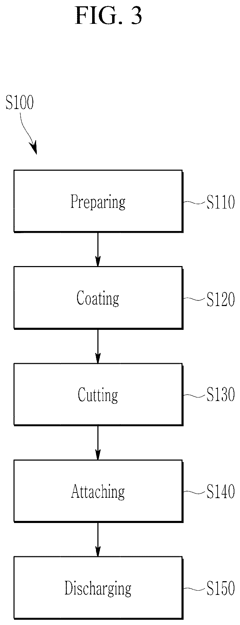

Hereinafter, the manufacturing method of the electrode plate 300 will be described with reference to FIGS. 3-8.

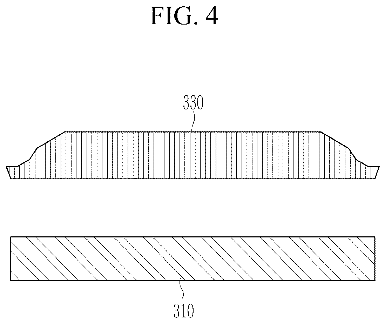

FIG. 3 is a flowchart showing a manufacturing method of the electrode plate 300 according to an embodiment. FIGS. 4-8 are cross-sectional views of stages in the manufacturing method of FIG. 3.

Referring to FIG. 3, an electrode plate manufacturing method S100 according to an embodiment includes a preparing step (S110), a coating step (S120), a cutting step (S130), an attaching step (S140), and a discharging step (S150). Each step of the electrode plate manufacturing method S100 according to an embodiment will be described in detail with reference to FIG. 4 to FIG. 8.

Referring to FIG. 4, the preparing step (S110) includes preparing the substrate 310 and the active material layer 330.

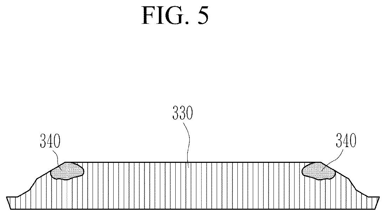

Referring to FIG. 5, the coating step (S120) includes coating the hydrophobic coating layer 340 having a hydrophobic functional group on the active material layer 330. For example, in the coating step (S120), the hydrophobic coating layer 340 may be coated on an area where cutting is to be performed on the active material layer 330 (e.g., at the edge of the top surface of the active material layer 330).

In another example, the coating step (S120) may be done by coating the hydrophobic coating layer 340 on the entire area of one surface of the active material layer 330. That is, in the coating step (S120), the hydrophobic coating layer 340 may be coated on the entire surface opposite to the surface adjacent to the substrate 310 in the active material layer 330.

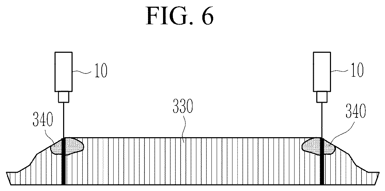

Referring to FIG. 6, in the cutting step (S130), the active material layer 330 is cut. The cutting step (S130) may be performed after the coating step (S120) is completed (e.g., the cutting may be performed through the entire thickness of the hydrophobic coating layer 340 and through the entire thickness of the material layer 330 in a direction oriented from the top surface to the bottom surface of the active material layer 330, such that lateral surfaces of the hydrophobic coating layer 340 and the material layer 330 are coplanar with each other). The active material layer 330 may be cut by a cutting device 10. The cutting device 10 may be, e.g., a laser cutting machine or a blade cutting machine.

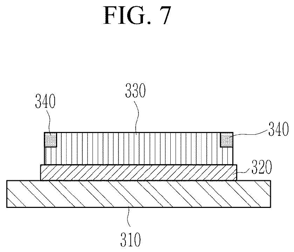

Referring to FIG. 7, in the attaching step (S140), the active material layer 330 is attached to the substrate 310. In the attaching step (S140), the adhesive layer 320 may be attached to one of the substrate 310 and the active material layer 330 to attach the substrate 310 and the active material layer 330 to each other.

Referring to FIG. 8, in the discharging step (S150), the insulating portion 350 is formed by discharging an insulating liquid 21 (e.g., an insulation solution) at the boundary between the active material layer 330 and the substrate 310. The insulating liquid 21 may be disposed from a discharge device 20. In the discharging step (S150), the insulating liquid 21 may cover a portion of the uncoated side of the hydrophobic coating layer 340 on the side of the active material layer 330.

On the other hand, the coating step (S120) described above in the electrode plate manufacturing method S100 according to an embodiment may introduce a hydrophobic functional group, e.g., to hydrophobically treat the substrate 310. This hydrophobic functional group may penetrate the surface of the substrate 310 as well as into the interior of the substrate 310.

In the present disclosure, "hydrophobic" means being relatively more hydrophobic than the substrate 310 by an atomic layer deposition (ALD) (i.e., having a larger contact angle than the substrate 310). For example, the hydrophobic layer formed by the hydrophobic treatment may have a contact angle of 45° or more, e.g., a contact angle of 60° or more and 130° or less.

In order to introduce the hydrophobic group into the interior of the substrate 310, as an example according to an embodiment of the present disclosure, by introducing a precursor compound having the hydrophobic group as a vapor phase by the ALD method, and then generating the hydrophobic group on the substrate 310 by the ALD method, a hydrophobic treatment may be performed. The hydrophobic layer created by the hydrophobic treatment may be as thin as an angstrom unit and may form a film for hydrophobization.

The precursor compound introduced for the hydrophobic treatment has the hydrophobic functional group, and the hydrophobic functional group may be at least one of fluorine and silane, as described above. The precursor having such a hydrophobic functional group may include at least one of a compound having a leaving group (e.g., a halogen, amine or alkoxy group) and having a hydrophobic functional group including at least one of (e.g., selected from a group consisting of) fluorinated hydrocarbon and silane.

As described above, in the electrode plate manufacturing method according to an embodiment, coating of the hydrophobic coating layer 340 having the hydrophobic functional group on the active material layer 330 is performed. Accordingly, the hydrophobic coating layer 340 may prevent the insulating portion 350 from protruding above the substrate 310 by limiting the movement of the insulating liquid 21 to the outer surface of the substrate 310. Therefore, the stacking flatness of the final manufactured electrode plate 300 may be significantly improved.

By way of summation and review, a process of manufacturing electrode plates for a rechargeable battery may include a wet electrode manufacturing method (that uses a solvent to create an electrode active material slurry to be coated onto a current collector) and a dry electrode manufacturing method (that does not use a solvent). For example, the dry electrode manufacturing method may manufacture a thin-film electrode active material layer by using an electrode active material mixture including an electrode active material and various compounds on both surfaces of the electrode current collector. The manufactured electrode active material layer may be attached to the electrode current collector by heat and pressure.

However, if a thickness of the electrode plate increases during the process of manufacturing the electrode plate, the rechargeable battery may become excessively thick. In addition, if the thickness of the center and both sides of the electrode plate are manufactured differently, the thickness of the electrode assembly may be manufactured unevenly, making it difficult for the rechargeable battery to be manufactured to meet targeted external specifications.

In contrast, example embodiments are directed toward an electrode plate with a uniform thickness and a manufacturing method thereof. That is, according to the present disclosure, the electrode plate includes a hydrophobic coating layer, and an insulating portion may be made to cover a portion of the side of the active material layer that is not coated with the hydrophobic coating layer. Accordingly, a local thickness rising of the insulation portion may be prevented or substantially minimized.

Therefore, the stacking flatness of the electrode plate may be significantly improved. In other words, since the thickness of the center and both sides of the electrode plate may be manufactured to be the same, the rechargeable battery may be manufactured to meet target external specifications of the rechargeable battery.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode plate, comprising:
a substrate;
an active material layer on the substrate;
a hydrophobic coating layer on at least an edge of the active material layer, the hydrophobic coating layer having a hydrophobic functional group; and
an insulating portion at a boundary between the active material layer and the substrate, the insulating portion covering at least a part of a side surface of the active material layer below the hydrophobic coating layer.

2. The electrode plate as claimed in claim 1, wherein the insulating portion is between the substrate and the hydrophobic coating layer, an entirety of the insulating portion being below the hydrophobic coating layer.

3. The electrode plate as claimed in claim 1 or claim 2, wherein the hydrophobic coating layer is coated on an entire top surface of the active material layer, the top surface of the active material layer facing away from the substrate.

4. The electrode plate as claimed in any one of claims 1 to 3, wherein the active material layer is a dry active material layer.

5. The electrode plate as claimed in any one of claims 1 to 4, further comprising an adhesive layer between the substrate and the active material layer.

6. The electrode plate as claimed in any one of claims 1 to 5, wherein the hydrophobic functional group includes at least one of fluorine and silane.

7. An electrode plate manufacturing method, comprising:
preparing a substrate and an active material layer;
coating a hydrophobic coating layer on at least an edge of the active material layer, the hydrophobic coating layer having a hydrophobic functional group;
cutting the active material layer;
attaching the active material layer to the substrate, such that the active material layer is on the substrate; and
discharging an insulating solution to a boundary between the active material layer and the substrate to form an insulating portion at the boundary between the active material layer and the substrate, the insulating portion covering at least a part of a side surface of the active material layer below the hydrophobic coating layer.

8. The electrode plate manufacturing method as claimed in claim 7, wherein discharging the insulating solution includes covering with the insulation solution at least a portion of the side surface of the active material layer that is not coated with the hydrophobic coating layer.

9. The electrode plate manufacturing method as claimed in claim 7 or claim 8, wherein coating the hydrophobic coating layer includes applying the hydrophobic coating layer to an area where cutting is performed on the active material layer.

10. The electrode plate manufacturing method as claimed in any one of claims 7 to 9, wherein coating the hydrophobic coating layer includes coating the hydrophobic coating layer on an entire surface of the active material layer that faces away from the substrate.

11. The electrode plate manufacturing method as claimed in any one of claims 7 to 10, wherein cutting is performed after the coating.

12. The electrode plate manufacturing method as claimed in any one of claims 7 to 11, wherein attaching the active material layer to the substrate includes:
attaching an adhesive layer to one of the substrate and the active material layer; and
attaching the other one of the substrate and the active material layer to the adhesive layer, such that the adhesive layer is between the substrate and the active material layer and attaches the active material layer and the substrate to each other.

13. The electrode plate manufacturing method as claimed in any one of claims 7 to 12, wherein the active material layer is a dry active material layer.

14. The electrode plate manufacturing method as claimed in any one of claims 7 to 13, wherein the hydrophobic functional group includes at least one of fluorine and silane.
